# EUROPEAN PATENT APPLICATION

(11) **EP 1 953 255 A1**
(43) Date of publication of application: **06.08.2008**
(21) Application number: 06822745.3
(22) Date of filing: 01.11.2006
(51) Int. Cl.: C23C 2/38, C23C 2/06, C23C 22/00, C23C 28/00

(54) **STEEL PIPE FOR AUTOMOBILE PIPING**

(30) Priority: 01.11.2005 JP 2005318287
(71) Applicant: Sanoh Kogyo Kabushiki Kaisha, Tokyo 150-0002 (JP)
(72) Inventor: OMOTE, Kazuyuki, Ibaraki 306-0041 (JP); YAMASHITA, Yusuke, Ibaraki 306-0041 (JP)
(74) Representative: Liesegang, Eva
(86) International application number: PCT/JP2006/321816
(87) International publication number: WO 2007/052683

(57) **Abstract**

A steel pipe for use in a piping of an automobile is provided, which can exhibit enhanced corrosion resistance and resistance to chipping required for a steel pipe for use in a vehicle, such as a fuel piping or brake piping, without need of employing a thicker protective resin coating layer as well as provide excellent formability for processing an end portion of the pipe. In a steel pipe which is coated with a multilayered coating including a plated coating, the multilayered coating comprises a hot dipped coating 12, a chemical conversion coating 14 provided as an outer layer of the hot dipped coating, and an outermost thin PA resin coating 18.

## Description

### BACKGROUND OF THE INVENTION

### Field of the Invention

The present invention generally relates to a steel pipe for use in a piping for a vehicle, such as a fuel piping or brake piping for an automobile, and in particular to a steel pipe having enhanced preserving ability for scratched portions caused by striking a stone or the like on the pipe.

### Background Art

For a steel pipe for use in an automobile of this sort, higher ability for corrosion resistance and chemical resistance is required. Conventionally, for such a steel pipe used for a piping of an automobile, it is attempted to enhance corrosion resistance by providing zincing on its surface and covering the surface with a chromate chemical conversion coating.

A piping for an automobile is generally arranged around the underside of its body and extends up to an engine. For such a piping, resistance to chipping should be enhanced so as to prevent damage of the plated coating due to strike of a rebounding stone or the like during running. Therefore, a resinous coating layer having a relatively large thickness is often provided for the outermost layer.

For a conventional steel pipe for use in an automobile, the surface of the steel pipe is covered with a zinced coating, the a chromate chemical conversion treatment is then applied to the surface covered with the zinced coating, and the so treated surface is further coated twice with a PA 11 resin or PP resin.

However, for a conventional steel pipe for use in an automobile, the plating or zincing process is usually performed by electrolytic zincing. Generally, plated coatings, including zinced coatings, have adequate corrosion resistance, while being susceptible to an impact to be caused by strike of a stone or the like. For electrolytic zincing, production of a thicker coating is difficult. Therefore, in the case of a steel pipe for use in an automobile for which enhancement of resistance to chipping (resistance to impact to be caused by strike of a stone or the like) is required, the thickness of the plated coating inevitably becomes unsatisfied. For this reason, a crack or scratch may reach an iron basis of the steel pipe when it occurs due to impact caused by a stone or the like. In order to improve the resistance to chipping, it is necessary to make an outermost resin layer as thick as possible so as to protect the zinced coating.

On the other hand, in case of the steel pipe for use in a piping of an automobile, in order to connect an end portion of the pipe with a joint, it is necessary to machine the end portion by flaring or bulging. In this case, for the pipe whose resistance to chipping is enhanced by such a thicker resin layer as described above, it is difficult to perform the machining for the end portion unless the resin is peeled off over a portion corresponding to the end portion.

Therefore, it is an object of the present invention to provide a hot dipped steel pipe, which can dissolve the prior art problem as described above, enhance the corrosion resistance and resistance to chipping required for the pipe for use in a piping of a vehicle without need of providing a thicker protective resin coating layer, exhibit an excellent corrosion resistance, and enable to enhance formability on the pipe end portion.

### SUMMARY OF THE INVENTION

In order to achieve the above object, one aspect of the present invention is a plated steel pipe, which is coated with a multilayered coating including a plated coating, the multilayered coating comprising: a hot dipped coating, a chemical conversion coating provided as an outer layer of the hot dipped coating, and an outermost thin PA resin coating.

Another aspect of the present invention is a plated steel pipe coated with a multilayered coating including a plating layer, the multilayered coating comprising: a hot dipped coating, a chemical conversion coating provided as an outer layer of the hot dipped coating, and an outermost thin PA resin coating, wherein the thickness of the PA resin coating is controlled, correlating with the thickness of the hot dipped coating, such that enhancement of corrosion resistance and machining ability for processing one end of the pipe with the resin coating being coated thereon can be well balanced.

In the present invention, the thickness of the hot dipped coating is in the range of from 10 to 150µm. Preferably, the thickness of the hot dipped coating is in the range of from 10 to 50µm, and the thickness of the PA resin coating is in the range of from 50 to 150µm. It is also preferred that the thickness of a hot dipped diffusion layer to be created between the hot dipped coating and the surface of the steel pipe is 10µm or less.

It is preferred that the composition of the hot dipped coating comprises a Zn-Al-Mg type alloy, and the chemical conversion coating comprises a chromium free chemical conversion coating not containing hexavalent chromium compounds. A thin resin coating having a thickness of 50 to 150µm is coated on the chromium free chemical conversion coating via a primer.

According to the present invention, the hot dipped coating can exhibit adequate corrosion resistance as well as have an appropriately increased thickness. Therefore, it is not necessary to protect the steel pipe by employing a thicker resin layer as required for the conventional thinner coating formed by electrolytic zincing. In addition, since the corrosion resistance and the resistance to chipping required for a steel pipe for use in a piping of an automobile can be enhanced as well as a thinner outermost PA resin coating which is well balanced with the formability for processing an end portion of the pipe can be provided, an additional forming to the end portion of the steel pipe can be performed with ease without need of peeling off the resin coating.

### BRIEF DESCRIPTION OF THE DRAWINGS

Fig. 1 is a cross section showing a first embodiment of a steel pipe for use in a piping of an automobile according to the present invention.
Fig. 2 is a partial cross section showing a flared portion formed as an end portion of the pipe for used in piping of an automobile.
Fig. 3 is an illustration of a diffusion layer of a hot dipped coating formed on a steel pipe for use in a piping of an automobile according to the present invention.

### DETAILED DESCRIPTION OF THE INVENTION EXAMPLES

Hereinafter, one embodiment of a steel pipe for use in a piping of an automobile will be described with reference to the drawings.

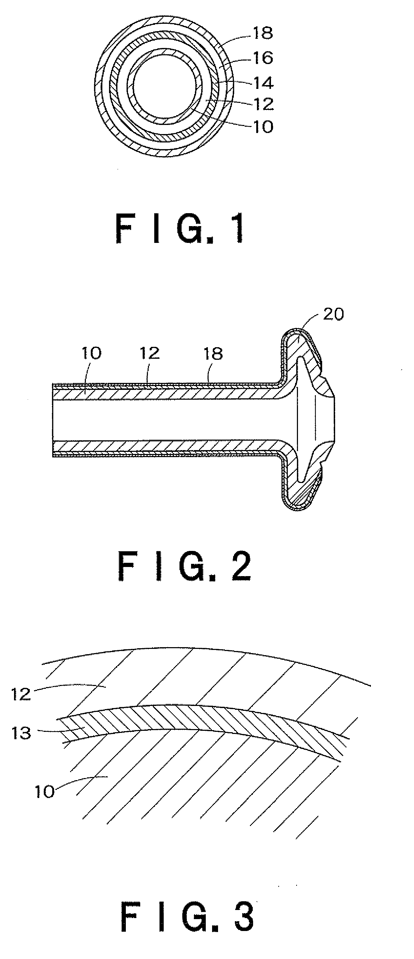

Fig. 1 is a cross section showing a steel pipe for use in a piping of an automobile according to one embodiment of the present invention. In Fig. 1, reference numeral 10 designates a steel pipe. In this embodiment, the steel pipe has an outer diameter of 4.76mm, and is used for a fuel piping, brake piping or the like for an automobile.

An outer peripheral surface of the steel pipe 10 is coated with a hot dipped coating 12 over the whole length and a chemical conversion coating 14 formed by a chemical conversion process is laminated on the hot dipped coating 12. Preferably, a Zn-Al-Mg hot dipping bath is used as a plating bath for forming the hot dipped coating 12.

For forming the chemical conversion coating 14, a chemical conversion process employing a chromium free chemical conversion solution not containing hexavalent chromium compounds is used.

In the hot dipped steel pipe of the present invention, a resin coating 18 formed of thermoplastic resin is coated on the surface of the chemical conversion coating 14 via a primer film 16 for enhancing the adhesiveness to the resin coating. As the resin, a PA resin is usually used, with a PA 11 resin being the most preferable.

According to the hot dipped steel pipe constructed as described above, since the plated coating for preservation of the steel pipe 10 is formed by hot dipping rather than by a conventional electrolytic plating, a thicker plated coating can be produced in a shorter time as compared with the electrolytic plating. For example, in the case of electrolytic zincing, the thickness of the plated coating obtained is approximately 30µm at the most.

On the other hand, in the case of hot dipping, it is easy to produce a uniform plated coating having a thickness within the range of from 10 to 150µm in a shorter time. In order to enhance the corrosion resistance and improve the resistance to impact, in this embodiment, the thickness of the hot dipped coating 12 should be preferably within the range of from 10 to 50µm.

Since the thickness of the hot dipped coating 12 is controlled to be within the range of from 10 to 150µm to enhance the corrosion resistance, correlating with such an increased thickness, the thickness of the outer most resin coating 18 can be reduced to an extend of from 50 to 150µm.

In this way, the hot dipped coating 12 is formed from a Zn-Al-Mg type alloy, having an adequate corrosion resistance, as well as it can be formed to have a greater thickness. Therefore, it is not necessary to cover this coating 12 with thick doubled resin coatings, as required for the conventional electrolytic zincing, to protect the plated coating from impact to be caused by strike of a stone or the like.

For the hot dipped steel pipe of the present invention, as shown in Fig. 2, it is necessary to form a flared portion 20 at an end portion of the steel pipe 20 for connection with a joint. Conventionally, since the outermost resin coating is fairly thick as described above, the additional forming to the end portion can not be performed unless the resin coating is peeled off. Contrary, in the case of hot dipped steel pipe of this embodiment, since the outermost resin coating 18 is significantly thin, the additional forming can be achieved to the end portion while being covered with the resin coating 18, i.e., without need of peeling off the resin coating 18.

In the hot dipped steel pipe of this embodiment, because the hot dipped coating 12 having a greater thickness is provided, a diffusion layer 13 is formed between the hot dipped coating 12 and the surface of the steel pipe 10, as shown in Fig. 3. In this case, if the thickness of the diffusion layer is greater than 10µm, cracks may tend to occur upon forming the flared portion 20 at the end portion, thus degrading the formability. Accordingly, the thickness of the diffusion layer 13 should be 10µm or less.

When the composition of the hot dipped coating 12 is a Zn-Al-Mg type alloy, a sacrificial anticorrosion effect can be provided, that is, when the hot dipped coating 12 is damaged, Zn, Al and Mg elute from the hot dipped coating 12 and repair such a damaged portion.

### (Test Example)

Next, results of a performance test for the steel pipe for use in a piping of an automobile according to the present invention will be described.

**Table 1: Results of the salt spray test**

| Test time (hr) | Thickness of hot dipped coatings (µm) | | | | | |
|---|---|---|---|---|---|---|
| | 5 | 13 | 25 | 50 | 150 | 200 |
| 200 | G NG | G | G | G | G | G |
| 500 | | G | G | G | G | G |
| 1000 | | G NG | G NG | G | G | G |
| 5000 | | | | NG | G | G |
| 10000 | | | | | G NG | G |
| 20000 | | | | | | G NG |

| | | | | | | |
|---|---|---|---|---|---|---|
| (Note) G: No red rust occurred NG: Red rust occurred | | | | | | |

Table 1 shows results of an evaluation of anticorrosion performance of the hot dipped coating, in which a salt spray test was carried out for steel pipes (JASO M101) on which hot dipped coatings having different thicknesses were formed.

The hot dipped coating having a thickness of about 5µm exhibits a substantially the same corrosion resistance as one having a thickness of about 25µm, i.e., a thickness which is an approximately limit value for conventional coatings formed by electrolytic zincing.

However, it is difficult for the current stage of actual production to form a hot dipped coating uniformly on the outer peripheral surface of a steel pipe such that it has a 5µm thickness. Namely, it has been found that a 10µm or greater thickness can facilitate the formation of a uniform film thickness.

From Table 1, when comparing the case of the 13µm thickness with the 5µm thickness, it is found that the corrosion resistance is significantly enhanced. Considering the balance between this fact and the object to form of a uniform thickness of the coating, the thickness of the hot dipped coating is preferably 10µm or greater.

In this way, the corrosion resistance is enhanced as the thickness of the hot dipped coating is increased. When it is excessively increased, the possibility to cause cracks in the coating due to impact also becomes higher. If providing such corrosion resistance that no occurrence of red rust is found even after a period of 10000 hours, such an anticorrosion property can satisfy enough the need of corrosion resistance for a fuel piping or brake piping of an automobile. Accordingly, the maximum thickness, which is acceptable, of the hot dipped coating is 150µm.

In view of the anticorrosion property, it is preferred to set the thickness of the hot dipped coating within the range of from 10 to 150µm, while in general consideration including the corrosion resistance, formability at an end portion, material cost and the like, the optimal range of the total thickness of the hot dipped coating and the PA resin coating is further limited with a correlated relationship.

Table 2 shows the correlation between the thickness of the hot dipped coating and the thickness of the PA resin coating, considering the productivity, material cost, anticorrosion property, formability at an end portion and the like.

**Table 2**

| | | | | | |
|---|---|---|---|---|---|
| Thickness of the PA11 extruded coating (µm) | 50 | 80 | 150 | 200 | |
| Productivity | NA | AP | AP | AP | |
| Material cost | EX | AP | AP | NA | |
| Anticorrosion property | QA | AP | AP | AP | |
| Formability at an end portion | EX | EX | EX | NA | |
| Thickness of the hot dipped coating (µm) | 5 | 20 | 50 | 150 | 200 |
| Productivity | NA | EX | AP | AP | QA |
| Material cost | EX | AP | AP | NA | NA |
| Anticorrosion property | QA | EX | AP | AP | AP |

| | | | | | |
|---|---|---|---|---|---|
| (Note) EX: excellent AP: applicable QA: questionable NA: not applicable | | | | | |

In the case where the thickness of the hot dipped coating is 5µm, while this coating exhibits substantially the same corrosion resistance as a possibly maximum thickness provided by the conventional electrolytic zincing and so reduces the material cost, this thickness renders the production of a uniform coating difficult and degrades the productivity. This is generally the case that the thickness of the PA resin coating is 50µm.

The 150µm or greater thickness of the hot dipped coating is advantageous in the corrosion resistance but provides a demerit of increasing the material cost. Also, when the thickness of the PA resin coating is 200µm or greater, the formability for enabling to process an additional forming to an end portion of the steel pipe without peeling off the resin coating is lost, and the material cost is increased.

Consequently, it was found that the thickness of about 20µm of the hot dipped coating and the thickness of about 80µm of the PA resin film can significantly enhance the anticorrosion property as compared with the conventional coating formed by electrolytic zincing and enable to make the resin coating as thin as possible, thus providing the generally best balance between the anticorrosion property, productivity, material cost and formability at an end portion of the steel pipe. In practice, the applicable range of the thickness for proving an acceptable balance between the anticorrosion resistance, formability at the end portion of the steel pipe, and reduction of the material cost is 10 to 50µm for the hot dipped coating, and 50 to 150µm for the PA resin coating.

While in the above description a steel pipe having an outer diameter of 4.76mm has been mentioned, the scope of the present invention is not limited to this value. For example, a steel pipe having a small diameter within the range of about 4 to 10mm can also be used.

## Claims

1. A steel pipe for use in a piping of an automobile, which is coated with a multilayered coating including a plated coating, the multilayered coating comprising: a hot dipped coating, a chemical conversion coating provided as an outer layer of the hot dipped coating, and an outermost thin PA resin coating.

2. A steel pipe for use in a piping of an automobile, which is coated with a multilayered coating including a plated coating, the multilayered coating comprising: a hot dipped coating, a chemical conversion coating provided as an outer layer of the hot dipped coating, and an outermost thin PA resin coating, wherein the thickness of the PA resin coating is controlled, correlating with the thickness of the hot dipped coating, such that enhancement of corrosion resistance and formability for processing an end portion of the pipe with the resin coating being coated thereon can be well balanced.

3. The steel pipe for use in a piping of an automobile according to claim 1 or 2, wherein the thickness of the hot dipped coating is in the range of from 10 to 150µm.

4. The steel pipe for use in a piping of an automobile according to claim 2, wherein the thickness of the hot dipped coating is in the range of from 10 to 50µm, and the thickness of the PA resin coating is in the range of from 50 to 150µm.

5. The steel pipe for use in a piping of an automobile according to claim 2, wherein the thickness of a hot dipped diffusion layer to be created between the hot dipped coating and the surface of the steel pipe is 10µm or less.

6. The steel pipe for use in a piping of an automobile according to claim 1 or 2, wherein the composition of the hot dipped coating comprises a Zn-Al-Mg type alloy.

7. The steel pipe for use in a piping of an automobile according to claim 1 or 2, wherein the chemical conversion coating comprises a chromium free chemical conversion coating not containing hexavalent chromium compounds.

8. The steel pipe for use in a piping of an automobile according to claim 7, wherein the PA resin coating having a thickness of 50 to 150µm is coated on the chromium free chemical conversion coating via a primer.

9. The steel pipe for use in a piping of an automobile according to any one of claims 2 to 8, wherein the steel pipe for use in a piping of an automobile is a fuel piping or brake piping with one end at which a flared portion is formed.
